(19) Europäisches Patentamt
European Patent Office
Office européen des brevets

(11) **EP 4 528 428 A1**

(12) **EUROPEAN PATENT APPLICATION**

(43) Date of publication:
26.03.2025 Bulletin 2025/13

(21) Application number: 23216601.7

(22) Date of filing: 14.12.2023

(51) International Patent Classification (IPC):
*G06F 1/26* (2006.01)      *G06F 1/28* (2006.01)
*G06F 1/3203* (2019.01)      *G06F 1/3209* (2019.01)
*G06F 1/3212* (2019.01)      *G06F 1/3296* (2019.01)

(52) Cooperative Patent Classification (CPC):
G06F 1/3209; G06F 1/26; G06F 1/28; G06F 1/3203;
G06F 1/3212; G06F 1/3296

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 21.09.2023 KR 20230126329

(71) Applicant: SKAIChips Co., Ltd.
Suwon-si, Gyeonggi-do 16571 (KR)

(72) Inventors:
• Lee, Kang Yoon
05834 Seoul (KR)

• Kim, Yeong Hun
16401 Suwon-si, Gyeonggi-do (KR)
• Song, Ji Hoon
16417 Suwon-si, Gyeonggi-do (KR)
• Jang, Jae Hyung
16845 Yongin-si, Gyeonggi-do (KR)
• Jo, Jong Wan
16418 Suwon-si, Gyeonggi-do (KR)
• Pu, Young Gun
16684 Suwon-si, Gyeonggi-do (KR)

(74) Representative: Grünecker Patent- und
Rechtsanwälte
PartG mbB
Leopoldstraße 4
80802 München (DE)

(54) **POWER MANAGEMENT DEVICE**

(57) Provided is a power management device including a first power domain operating in a sleep mode consuming minimal power, and a second power domain turned on exclusively when a wake signal is received from an external device within a communication range of the first power domain, wherein the first power domain includes an always-on Digital Low-DropOut (DLDO), and the second power domain includes a main Low-DropOut (LDO), and split sequence control is performed on power management in the first power domain and the second power domain.

FIG.4

**Description**

BACKGROUND OF THE INVENTION

Field of the Invention

The present invention relates to a power management device, and more particularly to a power management device applied to a power management system that performs split sequence control of low-power continuous operation and temporary operation.

Description of the Related Art

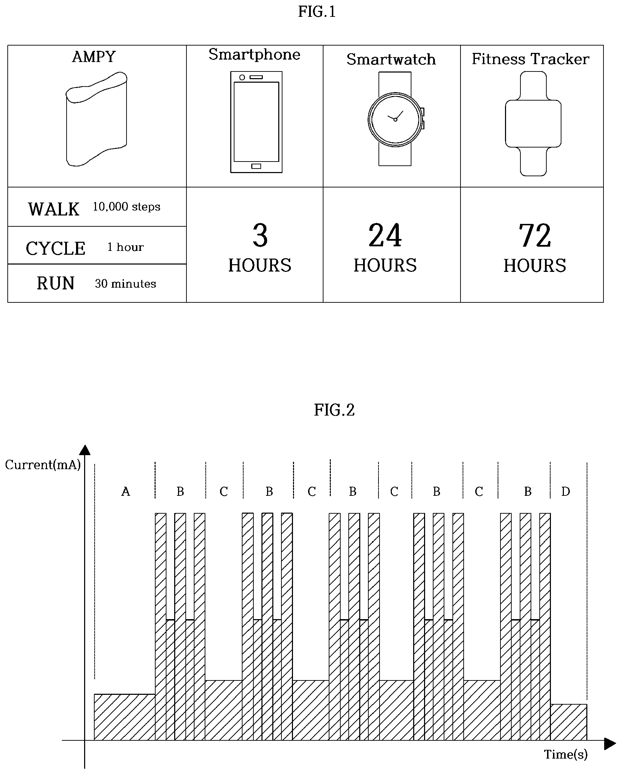

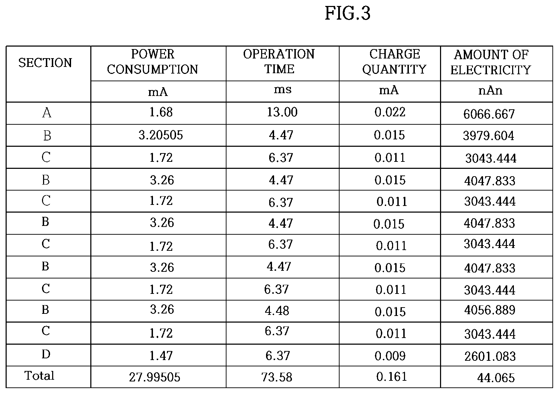

In general, edge devices require low-power operation in various fields. FIG. 1 illustrates examples of edge devices each having a high expected usage time. FIG. 2 illustrates power consumption during communication of a wireless communication IC supporting a BLE application. FIG. 3 is a table showing FIG. 2.

Power used by an edge device application illustrated in FIG. 1 may be divided into sections A, B, and C illustrated in FIGs. 2 and 3. It can be seen that sections A and C are standby power levels used in a sleep mode, and thus the duration of section B, which is an actual operation time during the day, is not large. These low-power operation requirements result in a situation where the devices have to operate at low power in all states even though an actual operation time is short. However, an attempt to implement all states using low power leads to practical limitations in ensuring performance. In particular, even though devices such as smart homes are used only a few times a day, performance of these devices is degraded since the devices are required to be implemented using low power. In addition, the above low-power implementation method has limitations in load transient characteristics, which may cause a problem in response of a regulator to voltage fluctuation.

In short, there are low-power operation requirements in various fields of edge devices and resultant limitations in performance, especially performance degradation occurring even in a device used only a few times, and limitations in load fluctuation characteristics.

SUMMARY OF THE INVENTION

A technical task to be achieved by the present invention is to provide a power management device that overcomes limitations in load fluctuation characteristics to improve response to temporary fluctuations in voltage, and manages edge device power in various environments and voltages.

In addition, another technical task to be achieved by the present invention is to provide a power management device used for low-power operation split sequence control power management that improves performance and efficiency of an edge device by performing optimal ultra-low power operation during a main voltage ON time and an OFF operation in a sleep mode.

The technical tasks to be achieved by the present invention are not limited to the technical tasks mentioned above, and other technical tasks not mentioned here may be clearly understood by those skilled in the art to which the present invention pertains from the description below.

In accordance with the present invention, the above and other objects can be accomplished by the provision of a power management device including a first power domain operating in a sleep mode consuming minimal power, and a second power domain turned on exclusively when a wake signal is received from an external device within a communication range of the first power domain, wherein the first power domain includes an always-on Digital Low-DropOut (DLDO), and the second power domain includes a main Low-DropOut (LDO), and split sequence control is performed on power management in the first power domain and the second power domain.

The first power domain may further include an always-on BGR configured to receive a battery voltage and generate a reference voltage of the always-on DLDO and the main LDO, a self-tracking reference filter provided on an output side of the always-on BGR and configured to adjust internal resistance to adjust the reference voltage when a setting time for stable operation of voltages of the always-on DLDO and the main LDO exceeds a threshold, and a battery voltage power supply initialization unit (VBAT Power-On Reset (VBAT POR)) configured to initialize the always-on DLDO by applying a reset signal to the always-on DLDO before the battery voltage is applied to operate the always-on DLDO.

The always-on BGR may include a first BJT and a second BJT having different magnitudes, a differential amplifier connected to collector terminals of the first BJT and the second BJT to output a difference between currents flowing through the first BJT and the second BJT, a current copy unit having a current mirror structure connected to an output side of the differential amplifier and provided to copy the current difference to an output terminal side of the always-on BGR, and a resistor having a T-type network structure connected to base terminals of the first BJT and the second BJT.

The always-on BGR may further include a first variable resistor connected to an emitter terminal of the first BJT,

and a second variable resistor connected to the output terminal side, wherein the first variable resistor and the second variable resistor may be adjusted according to a current of a PTAT (Proportional To Absolute Temperature) component flowing to a side of the first variable resistor and a current of a CTAT (Complementary To Absolute Temperature) component flowing through the resistor to allow a voltage at the output terminal unrelated to temperature to be output, and the voltage at the output terminal may be adjusted when the voltage at the output terminal exceeds a certain value.

The always-on DLDO may include an SAR analog-to-digital converter (ADC) configured to convert a current output voltage of the always-on DLDO into digital code and transmit the converted digital code, a digital gain controller configured to calculate a difference between the current output voltage and a target voltage as an error value, determine a current state by tracking a change in the error value using a differential value of the error value, and output a control variable according to the current state, and a pass transistor array configured to be turned ON/OFF according to the control variable to output a calibrated output voltage of the always-on DLDO.

The always-on DLDO may further include a window ADC configured to operate a clock to operate the SAR ADC and the digital gain controller when the current output voltage is outside a threshold voltage range, and stop the clock to suspend operations of the SAR ADC and the digital gain controller when the current output voltage is within the threshold voltage range.

The main LDO may have a structure of a multi-pass transistor, and the multi-pass transistor may sequentially operate based on a counter structure that operates at a set frequency to reduce inrush current, which is generated when a switch signal is turned ON, when abrupt voltage change occurs in an external capacitor.

The counter structure may use a counter circuit based on a specific digital logic gate and a D-flip-flop, and the counter circuit may have selection modes capable of selecting a change rate of an output voltage for stabilization of a voltage according to a load current change occurring in an output voltage of the LDO.

The counter structure may select a rough control signal COARSE_CONT and a fine control signal FINE_CONT among the selection modes to adjust an output voltage at a plurality of voltage levels, and perform self-tracking so that an output voltage is initially stabilized using the rough control signal when the main LDO is turned on, and the output voltage is finely adjusted through the fine control signal when a load current changes to be out of a set range.

BRIEF DESCRIPTION OF THE DRAWINGS

FIG. 1 illustrates examples of edge devices each having a high expected usage time;
FIG. 2 illustrates power consumption during communication of a wireless communication IC supporting a BLE application;
FIG. 3 is a table showing FIG. 2;
FIG. 4 illustrates a power management device used for low-power operation split sequence control power management according to an embodiment of the present invention;
FIG. 5 illustrates an example of a timing diagram of the power management device of FIG. 4;
FIG. 6 is a block diagram illustrating an example of an always-on BGR of the power management device used for low-power operation split sequence control power management according to an embodiment of the present invention;
FIG. 7 illustrates an always-on DLDO of the power management device used for low-power operation split sequence control power management according to an embodiment of the present invention;
FIG. 8 is an operation timing diagram of the always-on DLDO of FIG. 7;
FIG. 9 is a block diagram of a window ADC used as an event detector of FIG. 7;
FIG. 10 is a block diagram of an SAR ADC of FIG. 7;
FIG. 11a to FIG. 11d illustrate a simulation result of the always-on DLDO;
FIG. 12 illustrates a circuit of a main LDO;
FIG. 13 illustrates a 32 kHz counter structure illustrated in FIG. 12;
FIG. 14 is a timing diagram for an operation of the main LDO; and
FIG. 15 is a diagram illustrating a split sequence control power management method using the power management device according to an embodiment of the present invention.

DETAILED DESCRIPTION OF THE INVENTION

Since the present invention may be variously changed and have various forms, specific embodiments will be illustrated in the drawings and described in detail in the text. However, this is not intended to limit the present invention to a specific disclosed form, and it should be understood that all changes, equivalents, and substitutes within the spirit and technical scope of the present invention are included in the present invention. While describing each drawing, similar reference numerals are used for similar components.

Unless defined otherwise, all terms used herein, including technical or scientific terms, have the same meaning as commonly understood by a person of ordinary skill in the technical field to which the present invention pertains. Terms defined in commonly used dictionaries should be interpreted as having meanings consistent with meanings in the context of the related technology, and should not be interpreted in an ideal or excessively formal sense unless explicitly defined in the present application.

Hereinafter, preferred embodiments of the present invention will be described in more detail with reference to the attached drawings.

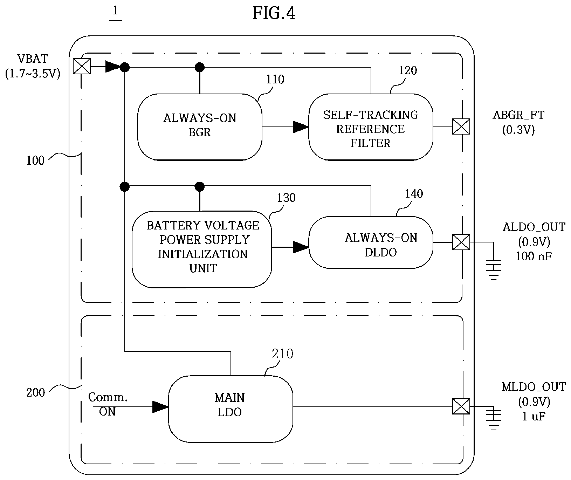

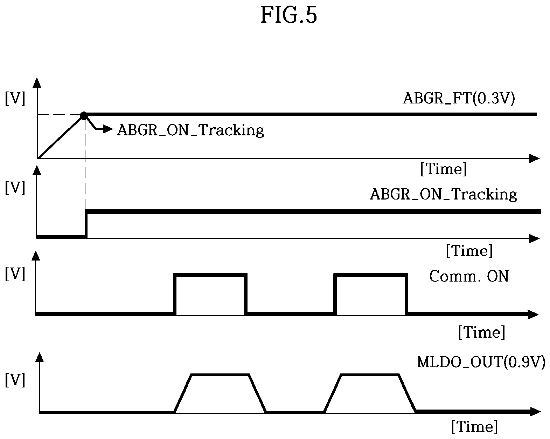

FIG. 4 illustrates a power management device used for low-power operation split sequence control power management according to an embodiment of the present invention. FIG. 5 illustrates an example of a timing diagram of the power management device of FIG. 4.

The power management device 1 used for low-power operation split sequence control power management of this embodiment (hereinafter, power management device) includes a first power domain 100 operating in a sleep mode consuming minimal power, and a second power domain 200 turned on only when a wake signal is received from an external device within a communication range of the first power domain 100. The first power domain 100 includes an always-on Digital Low-DropOut (DLDO) 140, and the second power domain 200 includes a main Low-DropOut (LDO) 210. The power management device 1 performs split sequence control on power management in the first power domain 100 and the second power domain 200.

The first power domain 100 may further include an always-on BGR 110, a self-tracking reference filter 120, and a battery voltage power supply initialization unit (VBAT Power-On Reset (VBAT POR)) 130. The always-on BGR 110 may receive a battery voltage and generate a reference voltage of the always-on DLDO 140 and the main LDO 210. The self-tracking reference filter 120 is provided on an output side of the always-on BGR, and may adjust internal resistance to adjust the reference voltage when a setting time for stable operation of voltages of the always-on DLDO 140 and the main LDO 210 exceeds a threshold. The battery voltage power supply initialization unit 130 may initialize the always-on DLDO 140 by applying a reset signal to the always-on DLDO 140 before the battery voltage is applied to operate the always-on DLDO 140.

The power management device 1 of this embodiment divides and performs power management into a first power domain (always-on domain) and a second power domain (on-off domain). This is a split sequence control power management strategy for efficient power management and device performance optimization. That is, the "always-on domain" refers to a domain in which power is supplied at all times, while the "on-off domain" refers to a domain in which power may be turned on or off as necessary, which indicate that each domain is designed to operate under a different power state and condition.

The always-on BGR 110 may supply the reference voltage to each LDO (the always-on DLDO 140 and the main LDO 210) while consuming a significantly small set current. The always-on BGR 110 may output a low voltage and is optimized for ultra-low power operation. The always-on BGR 110 uses less current than that of a conventional BGR and may reduce the design area. Here, ALON meaning "always-on" means that the corresponding BGR circuit is turned on at all times, and this circuit refers to a circuit used in a part continue to operate even when the power is turned off in general application. In addition, "bandgap reference" is a circuit that provides a stable voltage against temperature and power supply fluctuations, which may play an important role in power management, especially in a voltage regulator such as an LDO.

The self-tracking reference filter 120 subsequent to the always-on BGR 110 serves to self-track a BGR output voltage to adjust a settling time required for a voltage to operate stably. In addition, the self-tracking reference filter 120 reduces circuit deterioration due to noise through a connected RC-Filter.

The battery voltage power supply initialization unit 130 operates first before the always-on DLDO 140 is turned on, and serves to apply a reset signal for initialization before external power is applied so that voltages of a serial peripheral interface (SPI) signal of the circuit and digital control signals inside the always-on DLDO 140 may be normally maintained. That is, the battery voltage power supply initialization unit 130 applies an initialization signal before the always-on DLDO 140 operates to ensure normal operation of the circuit.

The always-on DLDO 140 is a block that needs to be turned on at all times, is closely related to quiescent current, and operates at significantly low power to minimize battery consumption. The always-on DLDO 140 plays a key role in an overall operating state of a system. In this embodiment, the always-on DLDO 140 uses a digital gain controller instead of an analog error amplifier, and may track a change in a voltage waveform according to a change in load current of an output node of the always-on DLDO. The always-on DLDO 140 efficiently manages power and supports device operation in a sleep mode using minimal power consumption. As a result, power consumption is significantly reduced.

The main LDO 210 of the second power domain has low noise and high power supply rejection ratio (PSRR) characteristics to operate a sensitive RF block. On the other hand, the always-on DLDO 140 of the first power domain needs to be turned on at all times during the sleep mode, and thus operates only at minimum current to extend a battery lifespan.

A power domain split strategy of this embodiment performing an operation by division into the first power domain and the second power domain allows power consumption to be reduced and performance to be optimized by supplying power intensively only to necessary parts. Always-on circuits, such as the always-on DLDO 140 and the always-on BGR 110, operate with minimal current, thereby reducing power consumption of the overall system. In this way, battery lifespan is extended and power efficiency of the device is improved. The low-power operation characteristics of the always-on DLDO 140 and main LDO 210 extend the battery life and contribute to minimizing overall power consumption. In addition, the self-tracking reference filter 120 and the always-on BGR 110 serve to improve voltage stability and reduce a setting time. As a result, stability and efficiency of the overall system are improved.

Hereinafter, each configuration will be described in more detail.

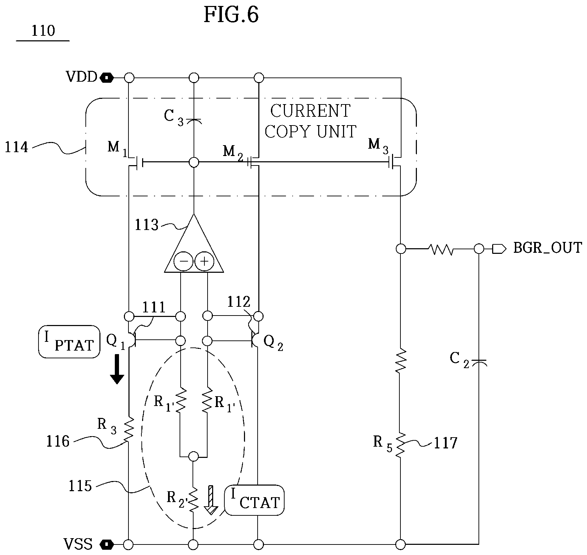

FIG. 6 is a block diagram illustrating an example of the always-on BGR 110 of the power management device used for low-power operation split sequence control power management according to an embodiment of the present invention.

The always-on BGR 110 serves to generate the reference voltage and to generate a constant reference voltage or current regardless of temperature change. Referring to FIG. 6, the always-on BGR 110 of this embodiment may include a first BJT 111 and a second BJT 112 having different magnitudes, a differential amplifier 113 connected to collector terminals of the first BJT 111 and the second BJT 112 to output a difference between currents flowing through the first BJT 111 and the second BJT 112, a current copy unit 114 having a current mirror structure connected to an output side of the differential amplifier 113 and provided to copy the current difference to an output terminal side of the always-on BGR 110, and a resistor 115 having a T-type network structure connected to base terminals of the first BJT 111 and the second BJT 112.

A conventional BGR circuit has a disadvantage of requiring a large design area due to use of a lot of BJTs and resistor elements. Further, to reduce current consumption, magnitudes of resistances R1 and R2 increase. The always-on BGR 110 of this embodiment uses less current and reduces the design area when compared to the existing BGR. That is, the always-on BGR 110 structurally modifies arrangement of the resistors into a T-type network structure as described above to enable operation at ultra-low power when compared to the existing BGR. That is, in this embodiment, a change in the magnitude of the resistance is achieved by modifying arrangement of the resistor using a T-network instead of a 3-network used in the existing BGR. These changes play an important role in reducing current consumption and minimizing the circuit area.

Equations 1 and 2 below show the change in the magnitude of the resistance when changing the n-network used in the existing BGR to the T-network, which is advantageous for ultra-low power operation using a smaller area.

$$R_{1'} = \frac{R_3 R_1}{2R_1 + R_3} = \frac{R_1}{2} \quad - \text{ (Equation 1)}$$

$$R_3' = \frac{R_1^2}{2R_1 + R_3} = \frac{R_1 - \frac{R_3}{2}}{2} \quad - \text{ (Equation 2)}$$

Meanwhile, the conventional BGR structure has a problem in that a trade-off occurs in current/performance in which performance changes depending on the temperature, voltage, and process changes when current consumption is reduced. However, according to the always-on BGR 110 of this embodiment, it is possible to generate a voltage and current unrelated to temperature (zero temperature coefficient).

An operating principle of the always-on BGR 110 is to use temperature characteristics of a diode (bipolar transistor) as shown in the following Equation 3.

$$I_C = I_S \exp(V_{BR}/(kT/q)) \quad - \text{ (Equation 3)}$$

In an embodiment of the present invention, the always-on BGR 110 further includes a first variable resistor 116 connected to an emitter terminal of the first BJT 111 and a second variable resistor 117 connected to the output terminal side, so that the first variable resistor 116 and the second variable resistor 117 may be adjusted according to a current of a PTAT (Proportional To Absolute Temperature) component flowing to the first variable resistor 116 side and a current of a CTAT (Complementary To Absolute Temperature) component flowing through the resistor 115 to output a voltage at the output terminal unrelated to temperature, and the voltage at the output terminal may be adjusted when the voltage at the output terminal exceeds a certain value.

Specifically, the always-on BGR 110 may receive input of a "BGR_CONT" signal as a control signal for adjusting the first variable resistor 116 and a "BGR_TC_CONT" signal as a control signal for adjusting the second variable resistor 117 to adjust the current of the component flowing to the first variable resistor 116 side and the current of the CTAT component flowing through the resistor 115, thereby calibrating a voltage level of "BGR_OUT" and temperature characteristics of the always-on BGR 110. By applying the "BGR_CONT" signal to adjust the first variable resistor 116, it is possible to adjust the temperature characteristics and voltage level of the always-on BGR 110. In other words, as a result, it is possible to dynamically adjust the level of BGR_OUT, which is the output voltage of the always-on BGR 110, or the temperature characteristics. Meanwhile, by applying "BGR_TC_CONT" to adjust the second variable resistor 117, it is possible to calibrate the temperature characteristics of the always-on BGR 110. Since a main feature of the always-on BGR 110 is the ability to generate an invariant voltage or current with respect to changes according to temperature, a "BGR_TC_CONT" signal is used when performing fine adjustment or calibration while maintaining characteristics thereof. BGR_OUT is an output of the always-on BGR 110 and may be provided as a reference voltage to various circuits or systems. An output voltage BGR_OUT of the always-on BGR 110 serves to provide a stable reference voltage, and may be consistently and stably adjusted by the "BGR_CONT" signal applied to the first variable resistor 116 and the BGR_TC_CONT" signal applied to the second variable resistor 117 as described above. As a result, the always-on BGR 110 minimizes a performance fluctuation problem due to temperature, voltage, and process changes occurring in the existing BGR while adjusting the temperature characteristics and voltage level using the "BGR_CONT" signal and the "BGR_TC_CONT" signal. In other words, while the conventional BGR has a problem in that performance changes as current consumption is reduced, this embodiment greatly solves this conventional trade-off problem by generating a voltage and current unrelated to temperature through a combination of CTAT and PTAT. This has an effect of minimizing voltage fluctuations due to temperature changes, thereby ensuring performance stability against various environmental changes.

In summary, to overcome the problems of the existing BGR design, this embodiment introduces the always-on BGR 110, corrects resistance arrangement of the resistor 115, and adds a calibration function. As a result, the ultra-low power operation and stability against voltage changes are improved, and the design area is reduced.

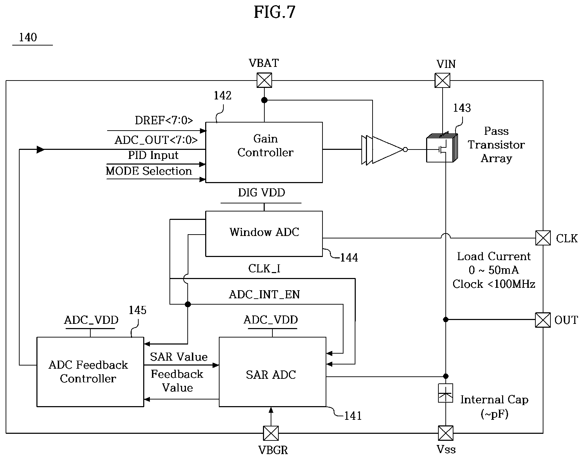

FIG. 7 illustrates the always-on DLDO 140 of the power management device used for low-power operation split sequence control power management according to an embodiment of the present invention.

The always-on DLDO 140 of this embodiment may include an SAR ADC 141, a digital gain controller 142, a pass transistor array 143, and an ADC feedback controller 145. The SAR ADC 141 may convert a current output voltage of the always-on DLDO 140 into digital code and transmit the converted digital code. The digital gain controller 142 may calculate a difference between the current output voltage and a target voltage as an error value, determine a current state by tracking a change in the error value using a differential value of the error value, and output a control variable according to the current state. The pass transistor array 143 may be turned ON/OFF according to the control variable output by the digital gain controller 142 to output a calibrated output voltage of the always-on DLDO. The always-on DLDO 140 may further include a window ADC 144. When the current output voltage is outside a threshold voltage range, the window ADC 144 may operate a clock to operate the SAR ADC 141 and the digital gain controller 142. However, when the current output voltage is within the threshold voltage range, the window ADC 144 may stop the clock to suspend operations of the SAR ADC and the digital gain controller 142.

Each configuration will be described in more detail. A conventional LDO structure uses an analog error amplifier. However, in this embodiment, the digital gain controller 142 is used. The digital gain controller 142 may rapidly adjust a parameter input value by tracking a change in output voltage. In other words, the digital gain controller 142 may rapidly track and adjust a parameter input value according to an output voltage waveform according to a change in load current related to the always-on DLDO output node. The digital gain controller 142 may calculate a difference between a received current output voltage and a target voltage as an error value, determine a current state using a differential value of the error value as initial input, and output an output variable (control variable) according to the current state. $\Delta Kp$, $\Delta Ki$, and $\Delta Kd$ are variables determining the amount of change in gain used when the digital gain controller 142 determines an output variable, and the digital gain controller 142 performs calculation to extract a correct value. Introduction of the digital gain controller 142 may shorten a stabilization time (setting time) of an output voltage, eliminate an error in a steady state, and achieve high power efficiency.

The pass transistor array may receive input of a correct output variable (control variable) value acquired by the digital gain controller 142, and output an output voltage of the always-on DLDO calibrated as pass transistors are turned ON/OFF according to the corresponding value to a drain, which reduces a waiting time of an output signal and contributes to high power efficiency.

The window ADC 144 is introduced for stability of the output voltage, and the window ADC 144 refers to an ADC operating in an event driven manner that operates when a value of an input signal falls within a specific "window" or threshold range. In other words, the ADC operates when the input signal is within this specific range. The window ADC 144 of the event driven manner may perform tracking so that an operation is performed in a stable range by operating a clock applied from the outside when an output voltage exceeds the specific range and the operation is unstable, and stop the clock when a target voltage condition is achieved. In this way, it is possible to limit occurrence of errors and power loss in a steady state section.

In this instance, the SAR ADC may accurately deliver information on a parameter input value using an ADC method to deliver information on a tracked output voltage to the digital gain controller 142. In this way, performance and stability of the entire system are enhanced.

The ADC feedback controller is used to limit errors due to load current changes at output of the always-on DLDO. The ADC feedback controller may feed back as many input values as errors occurring in a part where loss occurs while tracking a parameter input value when a load current rapidly changes at output of the always-on DLDO. In this way, occurrence of errors is limited, and stable operation is maintained even during rapid changes.

In the always-on DLDO 140 of this embodiment, a response to changes in output voltage becomes faster as a result of introduction of the digital gain controller 142, and a steady-state error is eliminated. In addition, a fast response of a calibrated output voltage achieves high power efficiency. Further, due to a combination of the window ADC 144 and the SAR ADC 141, changes in output of the always-on DLDO may be accurately tracked. Introduction of the ADC feedback controller reduces errors. In short, the always-on DLDO 140 of this embodiment enables faster, more accurate, and power-efficient operation when compared to existing analog LDO technology.

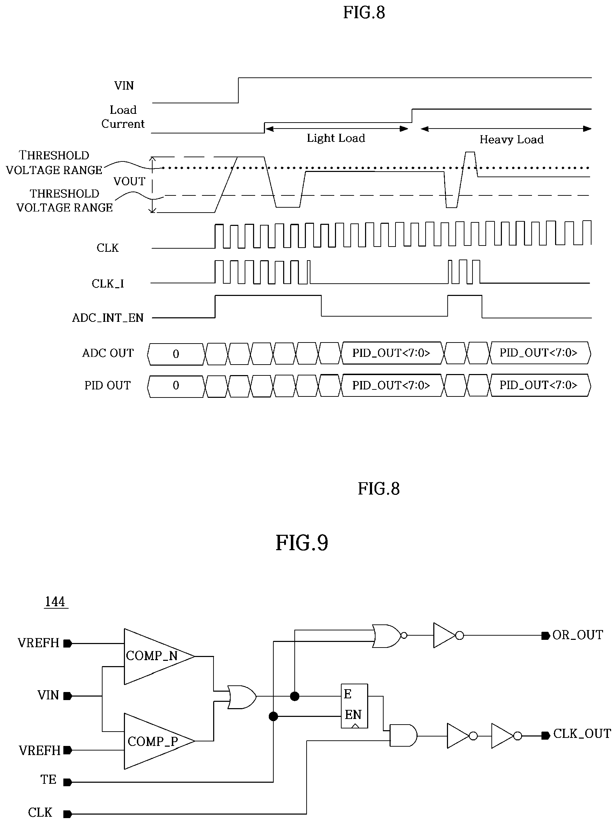

FIG. 8 is an operation timing diagram of the always-on DLDO of FIG. 7.

Initially, CLK and Vin are applied. This may be regarded as a signal that starts a basic operation of the always-on DLDO 140. CLK_I is a clock used to operate the ADC and the digital gain controller 142. Initially, CLK and Vin are applied, and the ADC and the digital gain controller 142 are operated using CLK_I until Vout reaches a desired voltage value. When Vout has not reached the desired voltage value, CLK_I remains active. The ADC measures a current state of Vout and delivers this information to the digital gain controller 142. The digital gain controller 142 may generate a control signal necessary to adjust Vout based on information received from the ADC. When Vout reaches the desired voltage value, CLK_I and ADC_INT_EN are turned off and the operations of the ADC and the digital gain controller 142 are switched to OFF states to conserve energy. When a load current state changes and Vout deviates from the desired voltage, an internal circuit is operated again to adjust Vout.

According to this embodiment, when Vout reaches the desired voltage, primary components are deactivated, and thus power consumption significantly decreases. When Vout deviates from the desired voltage, the system automatically reactivates to rapidly adjust Vout. As a result, stability of the output voltage is improved. The ability to adjust Vout in automatic response to external factors such as changes in load current is a main advantage of the present invention, and ensures stability and performance in a real-time system. In short, the always-on DLDO 140 of this embodiment may ensure high energy efficiency and fast response time when compared to existing technology through dynamic timing control and automated operation capabilities.

FIG. 9 is a block diagram of the window ADC 144 used as an event detector of FIG. 7.

This embodiment may use the window ADC 144 to accurately detect when an output voltage of the DLDO exceeds a specific threshold voltage range (between VREFL and VREFH). A Vin value is compared to VREFH and VREFL.

When the Vin value is between VREFH and VREFL, this state is regarded as a stable state and an OR gate outputs 0. The output of the OR gate is input to a clock gating part to set output of the AND gate to 0, thereby turning OFF the clock. When an output voltage of the always-on DLDO 140 is in a stable state and no event is generated, power consumption may be reduced by stopping a circuit using the clock, which may be effective in reducing weight and improving battery performance required for edge devices.

Conversely, when the Vin value is outside a voltage range between VREFL and VREFH, this state is regarded as an unstable state, a voltage adjustment event is immediately generated (by outputting a clock) to activate the PID controller and the ADC, and voltage adjustment starts. That is, when Vin (output of DLDO) is less than VREFH, COMP_N outputs 0, and when Vin is greater than VREFL, COMP_P outputs 0. As a result, stability of DLDO output is improved.

This embodiment effectively monitors and manages the output voltage of the DLDO using event-based detection and clock gating functions through the window ADC 144. As a result, power efficiency is greatly improved, and performance and battery lifespan of the edge device are improved.

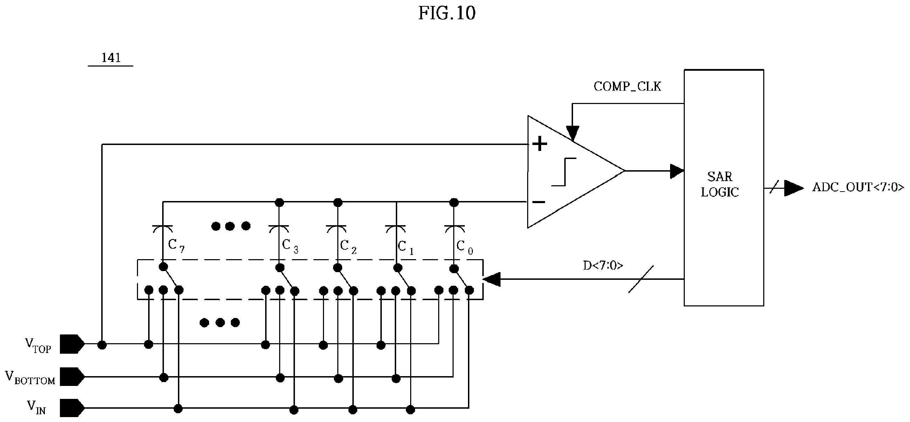

FIG. 10 is a block diagram of the SAR ADC 141 of FIG. 7.

The SAR ADC 141 may sample an output voltage value of the always-on DLDO 140 and convert the output voltage value into digital code. The converted digital code is delivered to the digital gain controller 142 and used as an input for an operation of a subsequent step. The digital gain controller 142 may determine whether voltage adjustment is necessary and how to adjust a voltage based on this code. The SAR ADC 141 has a fast conversion time and provides high precision, which allows rapid detection of even minute changes in the output voltage of the always-on DLDO 140 and appropriate adjustment. When the always-on DLDO 140 and the SAR ADC 141 provide an integrated solution, it is possible to achieve a circuit design that reduces complexity of the overall system, rapidly operates, and efficiently uses energy.

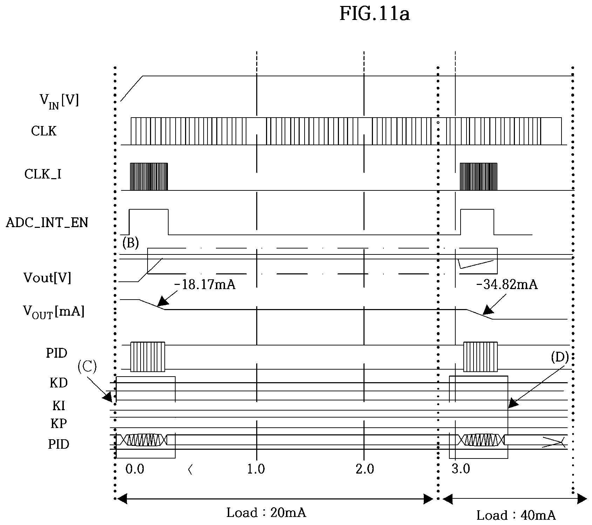

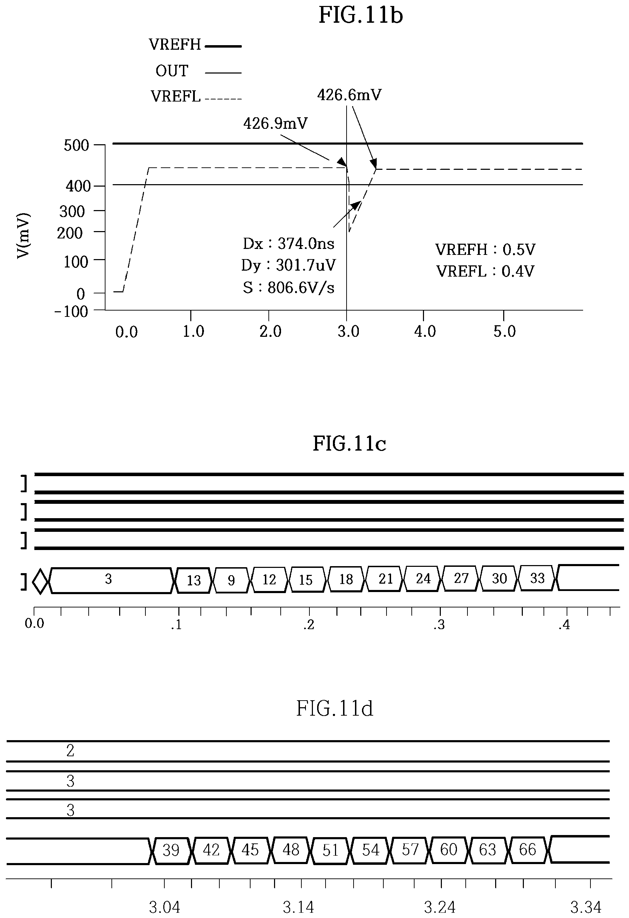

FIG. 11a to FIG.11d illustrate a simulation result of the always-on DLDO 140. FIG. 11b, FIG. 11c, FIG. 11d respectively shows in detail portion (B),(C),(D), each boxed with dash-single dotted line in FIG.11a.

Referring to FIG. 11, the digital gain controller 142 rapidly tracks changes in the output voltage of the always-on DLDO 140 and perform stable adjustment within a dead-zone to provide a fast and stable response. That is, when the output voltage Vout of the always-on DLDO 140 starts to rise from 0 V, the digital gain controller 142 tracks this change value and performs adjustment. When Vout reaches this dead-zone section, the digital gain controller 142 performs adjustment so that an output voltage remains constant within this section. That is, the output voltage Vout of the always-on DLDO 140 rises from 0 V and is constantly regulated in the dead-zone section based on the change value of the digital gain controller 142. When Vout reaches a stable state, CLK_I is turned OFF and the operations of the digital gain controller 142 and the ADC are suspended to reduce power consumption.

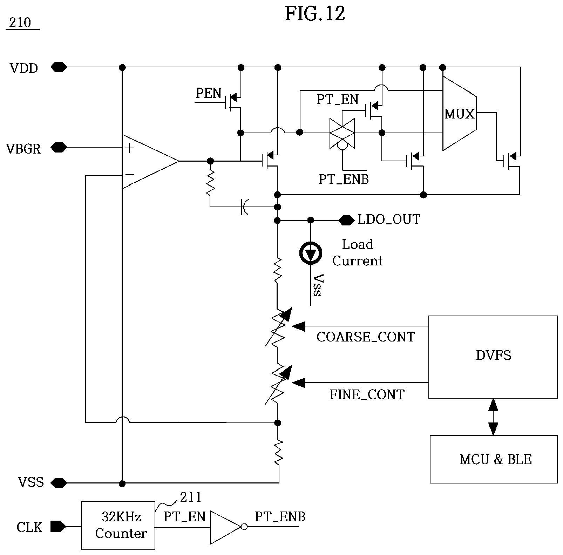

FIG. 12 illustrates a circuit of the main LDO 210.

Unlike a conventional LDO structure, the main LDO 210 of this embodiment does not use a single-pass transistor, and includes a multi-pass transistor. The multi-pass transistor of the main LDO 210 sequentially operates based on a counter structure that operates at a frequency of 32 kHz to reduce inrush current, which is generated when a switch signal is turned ON, when abrupt voltage change occurs in an external capacitor. This 32 kHz frequency counter structure controls the operation of the main LDO 210 to minimize leakage current when a wireless communication IC is not operating in the sleep mode, thereby significantly reducing power consumption. When the main LDO 210 is turned ON, the multi-pass transistor structure reduces large current consumption associated with rapid voltage changes in the external capacitor, thereby preventing damage inside the IC. These features of this embodiment may obtain a lot of advantages when applied to a wireless communication IC supported by a power application such as BLE. The structure of the main LDO 210 of this embodiment improves power efficiency through a multi-pass transistor and a counter structure of a frequency 32 kHz, and prevents damage inside the IC, thereby providing great advantages in various application fields.

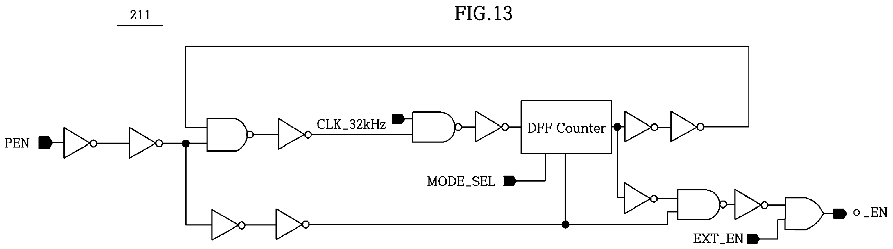

FIG. 13 illustrates a 32 kHz counter structure 211 illustrated in FIG. 12.

The 32 kHz counter structure 211 of FIG. 13 uses a counter circuit based on a specific Digital Logic Gate and a D-flip-flop. This structure is intended to rapidly stabilize a voltage according to load current changes occurring in the output voltage of the LDO. A selection mode is added to an internal counter circuit to appropriately select a change rate of the output voltage. The output voltage may be adjusted at several voltage levels using "COARSE_CONT" and "FINE_CONT" signals. Initially, when the main LDO 210 is turned on, the output voltage is stabilized using the "COARSE_CONT" signal. When the load current significantly changes, self-tracking is possible by finely adjusting the output voltage through the "FINE_CONT" signal. Using an external MCU or BLE Module, the output voltage is automatically self-calibrated according to load current changes using operating voltage scaling (Dynamic Voltage and Frequency Scaling (DVFS)) technology. The 32 kHz counter structure 211 of this embodiment shows a rapid and effective response to voltage changes through a dynamic voltage tracking function. Adjustment at various voltage levels is possible through coarse tuning and fine tuning, which provides a much more flexible approach when compared to an existing simple tuning method. A self-calibration function using DVFS technology further increases stability of the output voltage, thereby improving reliability of the entire system. In short, this embodiment uses an advanced counter circuit based on a digital logic gate and a D-flip-flop to enable fast and effective stabilization and fine-tuning of voltages, which greatly improves power efficiency and reliability of the overall system.

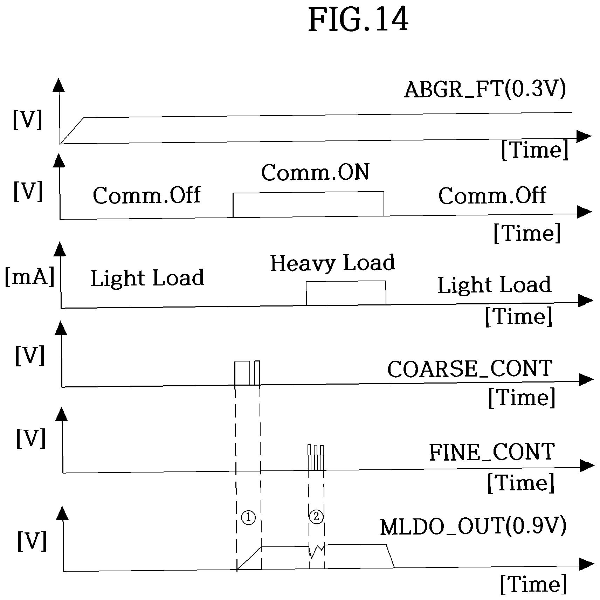

FIG. 14 is a timing diagram for an operation of the main LDO 210.

The main LDO 210 of this embodiment has a two-step tracking process. Initially, an output voltage is rough tracked using the "COARSE_CONT" signal, and then the output voltage is finely tracked using the "FINE_CONT" signal. Specifically, the main LDO 210 detects a communication signal (OOK signal) after outputting an ALON_BGR voltage, accordingly starts a process of stabilizing (settling) the output voltage, and stably tracks the output voltage using the "COARSE_CONT" signal until the initial output voltage of the main LDO 210 is stably settled. Thereafter, when the load current changes or fine voltage adjustment is required, the voltage is finely adjusted using the "FINE_CONT" signal. In other words, when the load current changes at the output node, the "FINE_CONT" signal is used to finely track the stable output voltage. This two-step tracking process significantly shortens a voltage settling time and reduces errors with respect to the target voltage, thereby providing a more stable output voltage.

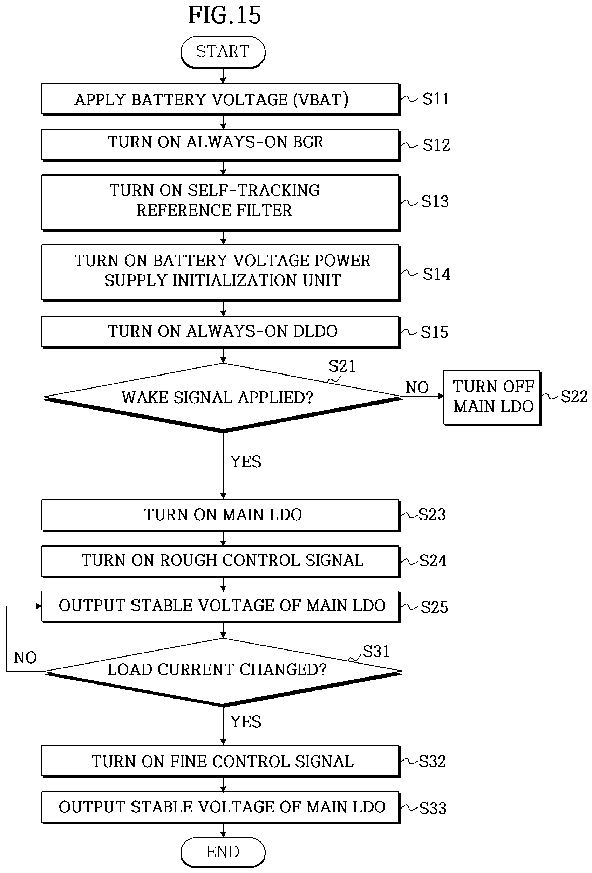

FIG. 15 is a diagram illustrating a split sequence control power management method using the power management device according to an embodiment of the present invention.

The split sequence control power management method using the power management device of this embodiment undergoes several steps from application of external power to stable voltage output of the main LDO. When the initial external power VBAT is applied, the first power domain is sequentially turned on. Thereafter, when an external communication signal (wake signal) is applied, the main LDO 210 is turned on. Thereafter, self-calibration operation is performed using DVFS technology, and when the load current significantly changes, a stable output voltage may be maintained at all times through finer tracking.

This process will be described below step by step with reference to FIG. 15.

First, the battery voltage VBAT is applied as external power (S11). Power is received from a specific power source (for example, a battery) to provide power for an initial operation of the system. The power source is ready and the circuit is ready to operate.

Thereafter, the always-on BGR is turned on (S12). To provide a stable reference voltage not affected by temperature, "BGR_CONT" and "BGR_TC_CONT" signals are used to calibrate a voltage level of "BGR_OUT" and temperature characteristics of the BGR. As a result, effects of temperature change are reduced and a stable reference voltage is provided.

Next, the self-tracking reference filter 120 is turned on (S13). To improve stability of an output voltage of the BGR, the self-tracking reference filter 120 self-tracks the output voltage of the BGR and performs filtering to maintain voltage stability. As a result, a stable reference voltage may be provided.

Next, the battery voltage power supply initialization unit 130 is turned on (S14). To ensure safe start of the circuit, an initialization signal is provided before external power is applied to ensure normal operation of the circuit.

Thereafter, the always-on DLDO is turned on (S15). To provide power to the always-on domain, the battery lifespan is extended through ultra-low power operation, and power is continuously supplied to the first power domain.

Next, it is determined whether a wake signal (common signal) has been applied (S21). The second power domain 200 is turned on only when a wake signal is received from an external device within a communication range with respect to the first power domain 100. To determine whether the main LDO 210 of the second power domain 200 operates, an operation condition of the main LDO may be determined by confirming that a wake signal is received.

When the wake signal is not applied as a result of determination, the main LDO 210 is turned off (S22). When the wake signal is applied, the main LDO 210 is turned on (S23). That is, the main LDO 210 operates only when necessary, and is turned off otherwise to save power.

Thereafter, when the main LDO 210 is turned on, a rough control signal (COARSE_CONT) is turned on (S24). To stabilize a voltage of the main LDO 210 at an initial stage, the voltage is roughly stabilized through rough voltage adjustment using COARSE_CONT (S25).

Next, a change in load current is checked (S31). To detect a change in voltage waveform according to a changing load current, a change in load current is detected and whether a fine control signal (FINE_CONT) is operating is determined accordingly. As a result, it is possible to maintain stability of the voltage waveform according to the change in load current.

When no change is detected as a result of checking the change in load current, a current stable voltage of the main LDO 210 is output.

When the change in load current is detected as a result of checking the change in load current, the fine control signal (FINE_CONT) is turned on to finely control a voltage of the main LDO 210 (S32). As a result, a stable voltage of the main LDO 210 is output again (S33).

According to an embodiment of the present invention, it is possible to provide a power management device used for low-power operation split sequence control power management that significantly reduces power consumption by operating at low power in a sleep mode in which edge devices are not mainly used and optimizes performance by being rapidly switched to a main operation sequence in a low-power mode so that the device operates a high performance when actual work needs to be performed by being activated.

According to an embodiment of the present invention, it is possible to provide a power management device used for low-power operation split sequence control power management that enables rapid and effective response to temporary changes in voltage (load changes) between the sleep mode and the main operation sequence.

According to an embodiment of the present invention, it is possible to provide a power management device used for low-power operation split sequence control power management that overcomes limitations of load fluctuation characteristics, improves response to temporary fluctuations in voltage, and manages edge device power in various environments and voltages.

In addition, according to an embodiment of the present invention, it is possible to provide a power management device used for low-power operation split sequence control power management that improves performance and efficiency of edge devices by optimal ultra-low power operation during a main voltage ON time and an OFF operation in a sleep mode.

In addition, according to an embodiment of the present invention, it is possible to provide a power management device used for low-power operation split sequence control power management that maintains low power in a standby state and rapidly switches to an operation mode in which performance is optimized when performing an actual task, thereby maintaining a balance between power consumption and performance, that is, dynamically managing power states of edge devices.

In addition, according to an embodiment of the present invention, it is possible to improve overall power efficiency by providing high performance only when actually needed and maintaining low power at other times.

The effects of the present invention are not limited to the effects described above, and should be understood to include all effects that may be inferred from the configuration of the invention described in the detailed description or claims of the present invention.

The description of the present invention given above is for illustrative purposes, and those skilled in the art will understand that the present invention may be easily modified into other specific forms without changing the technical idea or essential features of the present invention. Therefore, the embodiments described above should be understood in all respects as illustrative and not restrictive. For example, each component described as single may be implemented in a distributed manner, and similarly, components described as distributed may be implemented in a combined form.

The scope of the present invention is indicated by the patent claims described below, and all changes or modified forms derived from the meaning and scope of the claims and equivalent concepts thereof should be construed as being included in the scope of the present invention.

**Claims**

1.  A power management device comprising:

    a first power domain operating in a sleep mode consuming minimal power; and
    a second power domain turned on exclusively when a wake signal is received from an external device within a communication range of the first power domain, wherein:

       the first power domain comprises an always-on Digital Low-DropOut (DLDO), and the second power domain comprises a main Low-DropOut (LDO), and
       split sequence control is performed on power management in the first power domain and the second power domain.

2.  The power management device according to claim 1, wherein the first power domain further comprises:

    an always-on BGR configured to receive a battery voltage and generate a reference voltage of the always-on DLDO and the main LDO;
    a self-tracking reference filter provided on an output side of the always-on BGR and configured to adjust internal resistance to adjust the reference voltage when a setting time for stable operation of voltages of the always-on DLDO and the main LDO exceeds a threshold; and
    a battery voltage power supply initialization unit (VBAT Power-On Reset (VBAT POR)) configured to initialize the always-on DLDO by applying a reset signal to the always-on DLDO before the battery voltage is applied to operate the always-on DLDO.

3.  The power management device according to claim 2, wherein the always-on BGR comprises:

    a first BJT and a second BJT having different magnitudes;
    a differential amplifier connected to collector terminals of the first BJT and the second BJT to output a difference between currents flowing through the first BJT and the second BJT;
    a current copy unit having a current mirror structure connected to an output side of the differential amplifier and provided to copy the current difference to an output terminal side of the always-on BGR; and
    a resistor having a T-type network structure connected to base terminals of the first BJT and the second BJT.

4.  The power management device according to claim 3, wherein the always-on BGR further comprises:

    a first variable resistor connected to an emitter terminal of the first BJT; and
    a second variable resistor connected to the output terminal side,
    wherein the first variable resistor and the second variable resistor are adjusted according to a current of a PTAT (Proportional To Absolute Temperature) component flowing to a side of the first variable resistor and a current of a CTAT (Complementary To Absolute Temperature) component flowing through the resistor to allow a voltage at the output terminal unrelated to temperature to be output, and the voltage at the output terminal is adjusted when the voltage at the output terminal exceeds a certain value.

5.  The power management device according to claim 2, wherein the always-on DLDO comprises:

    an SAR analog-to-digital converter (ADC) configured to convert a current output voltage of the always-on DLDO into digital code and transmit the converted digital code;
    a digital gain controller configured to calculate a difference between the current output voltage and a target voltage as an error value, determine a current state by tracking a change in the error value using a differential value of the error value, and output a control variable according to the current state; and
    a pass transistor array configured to be turned ON/OFF according to the control variable to output a calibrated output voltage of the always-on DLDO.

6. The power management device according to claim 5, wherein the always-on DLDO further comprises a window ADC configured to operate a clock to operate the SAR ADC and the digital gain controller when the current output voltage is outside a threshold voltage range, and stop the clock to suspend operations of the SAR ADC and the digital gain controller when the current output voltage is within the threshold voltage range.

7. The power management device according to claim 2, wherein the main LDO has a structure of a multi-pass transistor, and the multi-pass transistor sequentially operates based on a counter structure that operates at a set frequency to reduce inrush current, which is generated when a switch signal is turned ON, when abrupt voltage change occurs in an external capacitor.

8. The power management device according to claim 7, wherein the counter structure uses a counter circuit based on a specific digital logic gate and a D-flip-flop, and the counter circuit has selection modes capable of selecting a change rate of an output voltage for stabilization of a voltage according to a load current change occurring in an output voltage of the LDO.

9. The power management device according to claim 8, wherein the counter structure selects a rough control signal COARSE_CONT and a fine control signal FINE_CONT among the selection modes to adjust an output voltage at a plurality of voltage levels, and performs self-tracking so that an output voltage is initially stabilized using the rough control signal when the main LDO is turned on, and the output voltage is finely adjusted through the fine control signal when a load current changes to be out of a set range.

FIG.1

| AMPY | Smartphone | Smartwatch | Fitness Tracker |
|---|---|---|---|
| WALK 10,000 steps<br>CYCLE 1 hour<br>RUN 30 minutes | 3<br>HOURS | 24<br>HOURS | 72<br>HOURS |

FIG.2

FIG.3

| SECTION | POWER CONSUMPTION | OPERATION TIME | CHARGE QUANTITY | AMOUNT OF ELECTRICITY |
|---|---|---|---|---|
| | mA | ms | mA | nAn |
| A | 1.68 | 13.00 | 0.022 | 6066.667 |
| B | 3.20505 | 4.47 | 0.015 | 3979.604 |
| C | 1.72 | 6.37 | 0.011 | 3043.444 |
| B | 3.26 | 4.47 | 0.015 | 4047.833 |
| C | 1.72 | 6.37 | 0.011 | 3043.444 |
| B | 3.26 | 4.47 | 0.015 | 4047.833 |
| C | 1.72 | 6.37 | 0.011 | 3043.444 |
| B | 3.26 | 4.47 | 0.015 | 4047.833 |
| C | 1.72 | 6.37 | 0.011 | 3043.444 |
| B | 3.26 | 4.48 | 0.015 | 4056.889 |
| C | 1.72 | 6.37 | 0.011 | 3043.444 |
| D | 1.47 | 6.37 | 0.009 | 2601.083 |
| Total | 27.99505 | 73.58 | 0.161 | 44.065 |

FIG.4

_1_

VBAT
(1.7~3.5V)

ALWAYS-ON
BGR
110

SELF-TRACKING
REFERENCE
FILTER
120

ABGR_FT
(0.3V)

100

BATTERY VOLTAGE
POWER SUPPLY
INITIALIZATION
UNIT
130

ALWAYS-ON
DLDO
140

ALDO_OUT
(0.9V)
100 nF

200

Comm.
ON

MAIN
LDO
210

MLDO_OUT
(0.9V)
1 uF

FIG.5

# FIG.6

110

FIG.7

140

VBAT                                          VIN

DREF<7:0>
ADC_OUT<7:0>          142
PID Input                          Gain
MODE Selection                   Controller                              Pass
                                                                         143   Transistor
                                                                               Array
DIG VDD

                                Window ADC                                              CLK
                                                        144              Load Current
                                                                        0 ~ 50mA
                                 CLK_I                                   Clock <100MHz

                                ADC_INT_EN

ADC_VDD      145                 ADC_VDD                                                 OUT

ADC Feedback          SAR Value          SAR ADC
Controller           Feedback
                     Value                                                      Internal Cap
                                                        141                     (~pF)

                                 VBGR                                    Vss

## FIG.8

FIG.8

## FIG.9

FIG.10

# FIG.11a

| | V_IN[V] | CLK | CLK_I | ADC_INT_EN | Vout[V] | V_OUT[mA] | PID | KD | KI | KP | PID |
|---|---|---|---|---|---|---|---|---|---|---|---|

(B)

−18.17mA

−34.82mA

(C)

(D)

0.0    ⟨    1.0    2.0    3.0

Load : 20mA

Load : 40mA

## FIG.11b

VREFH ——————
OUT ——————
VREFL - - - - - -

426.6mV

426.9mV

500
400
300
V(mV) 200
100
0
-100

0.0    1.0    2.0    3.0    4.0    5.0

Dx : 374.0ns
Dy : 301.7uV
S : 806.6V/s

VREFH : 0.5V
VREFL : 0.4V

## FIG.11c

] 3 X 13 X 9 X 12 X 15 X 18 X 21 X 24 X 27 X 30 X 33 X

0.0          .1          .2          .3          .4

## FIG.11d

2
3
3

39 X 42 X 45 X 48 X 51 X 54 X 57 X 60 X 63 X 66 X

3.04          3.14          3.24          3.34

FIG.12

210

FIG.13

211

# FIG.14

[V]  ABGR_FT(0.3V)

[Time]

[V]  Comm.Off  Comm.ON  Comm.Off

[Time]

[mA]  Light Load  Heavy Load  Light Load

[Time]

[V]  COARSE_CONT

[Time]

[V]  FINE_CONT

[Time]

[V]  ① ②  MLDO_OUT(0.9V)

[Time]

# FIG.15

```
                    ( START )
                        │
                        ▼
        ┌───────────────────────────────┐
        │ APPLY BATTERY VOLTAGE (VBAT)   │~ S11
        └───────────────────────────────┘
                        │
                        ▼
        ┌───────────────────────────────┐
        │   TURN ON ALWAYS-ON BGR        │~ S12
        └───────────────────────────────┘
                        │
                        ▼
        ┌───────────────────────────────┐
        │     TURN ON SELF-TRACKING      │~ S13
        │       REFERENCE FILTER         │
        └───────────────────────────────┘
                        │
                        ▼
        ┌───────────────────────────────┐
        │  TURN ON BATTERY VOLTAGE POWER │~ S14
        │    SUPPLY INITIALIZATION UNIT  │
        └───────────────────────────────┘
                        │
                        ▼
        ┌───────────────────────────────┐
        │    TURN ON ALWAYS-ON DLDO      │~ S15
        └───────────────────────────────┘
                        │
                        ▼                    S21
                  ◇───────────────◇                NO   ┌──────────────┐
                 WAKE SIGNAL APPLIED? ─────────────────→│  TURN OFF    │~ S22
                  ◇───────────────◇                     │  MAIN LDO    │
                        │                               └──────────────┘
                       YES
                        │
                        ▼
        ┌───────────────────────────────┐
        │       TURN ON MAIN LDO         │~ S23
        └───────────────────────────────┘
                        │
                        ▼
        ┌───────────────────────────────┐
        │   TURN ON ROUGH CONTROL SIGNAL │~ S24
        └───────────────────────────────┘
                        │
                        ▼
        ┌───────────────────────────────┐
    ┌──→│ OUTPUT STABLE VOLTAGE OF MAIN LDO │~ S25
    │   └───────────────────────────────┘
    │                   │
    │                   ▼                    S31
    │NO          ◇───────────────◇
    └────────── LOAD CURRENT CHANGED?
                ◇───────────────◇
                        │
                       YES
                        │
                        ▼
        ┌───────────────────────────────┐
        │  TURN ON FINE CONTROL SIGNAL   │~ S32
        └───────────────────────────────┘
                        │
                        ▼
        ┌───────────────────────────────┐
        │ OUTPUT STABLE VOLTAGE OF MAIN LDO │~ S33
        └───────────────────────────────┘
                        │
                        ▼
                    ( END )
```

**EP 4 528 428 A1**

Europäisches Patentamt
European Patent Office
Office européen des brevets

# EUROPEAN SEARCH REPORT

Application Number

EP 23 21 6601

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CN 112 732 068 A (GREE ELECTRIC APPLIANCES INC ZHUHAI) 30 April 2021 (2021-04-30) * the whole document * | 1-9 | INV. G06F1/26 G06F1/28 G06F1/3203 |
| Y | ASIF MUHAMMAD ET AL: "A High Performance Adaptive Digital LDO Regulator With Dithering and Dynamic Frequency Scaling for IoT Applications", IEEE ACCESS, IEEE, USA, vol. 8, 15 July 2020 (2020-07-15), pages 132200-132211, XP011800825, DOI: 10.1109/ACCESS.2020.3009601 [retrieved on 2020-07-24] * Section I: Introduction; figure 1 * | 1-9 | G06F1/3209 G06F1/3212 G06F1/3296 |

TECHNICAL FIELDS SEARCHED (IPC)

G06F

The present search report has been drawn up for all claims

| Place of search | Date of completion of the search | Examiner |
|---|---|---|
| The Hague | 15 May 2024 | Knutsson, Frédéric |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 21 6601

This annex lists the patent family members relating to the patent documents cited in the above-mentioned European search report.
The members are as contained in the European Patent Office EDP file on
The European Patent Office is in no way liable for these particulars which are merely given for the purpose of information.

15-05-2024

| Patent document cited in search report | Publication date | Patent family member(s) | Publication date |
|---|---|---|---|
| CN 112732068 A | 30-04-2021 | NONE | |

For more details about this annex : see Official Journal of the European Patent Office, No. 12/82

EPO FORM P0459